**Europäisches Patentamt**

(19) **European Patent Office**

**Office européen des brevets**

(11) Veröffentlichungsnummer: **0 017 185**
**B1**

(12) # EUROPÄISCHE PATENTSCHRIFT

(45) Veröffentlichungstag der Patentschrift:
**12.10.83**

(51) Int. Cl.³: **A 23 G 3/00**

(21) Anmeldenummer: **80101667.6**

(22) Anmeldetag: **27.03.80**

(54) Umhüllte Süssware mit hohem Proteingehalt und Verfahren zu ihrer Herstellung.

(30) Priorität: **29.03.79 DE 2912412**

(43) Veröffentlichungstag der Anmeldung:
**15.10.80 Patentblatt 80/21**

(45) Bekanntmachung des Hinweises auf die Patenterteilung:
**12.10.83 Patentblatt 83/41**

(84) Benannte Vertragsstaaten:
**AT BE CH DE FR GB IT LU NL SE**

(56) Entgegenhaltungen:
**DD-A-130 910**
**FR-A-1 482 405**
**FR-A-2 201 041**
**GB-A-674 038**
**US-A-4 038 423**
**US-A-4 039 688**

**Die Akte enthält technische Angaben, die nach dem Eingang der Anmeldung eingereicht wurden und die nicht in dieser Patentschrift enthalten sind.**

(73) Patentinhaber: **AUGUST STORCK KG,
Paulinenweg 12 Postfach 15 40, D-4802 Halle/Westfalen
(DE)**

(72) Erfinder: **Andersen, Geert, Dr., Hagedornstrasse 18,
D-4802 Halle/Westfalen (DE)**
Erfinder: **Lemke, Manfred, Moltkestrasse 49,
D-4802 Halle/Westfalen (DE)**

(74) Vertreter: **Patentanwälte TER MEER - MÜLLER -
STEINMEISTER, Triftstrasse 4, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Umhüllte Süssware mit hohem Proteingehalt und Verfahren zu ihrer Herstellung

Die Erfindung betrifft eine umhüllte Süssware mit einem Kern aus einer eiweisshaltigen Masse und einer zuckerhaltigen Hülle und einem Proteingehalt von 10 bis 50 Gew.-%.

Aus ernährungsphysiologischen Gründen wird immer stärker eine eiweissreiche Kost gefordert. Süsswaren, insbesondere Zuckerwaren, haben sich bisher für die Erfüllung dieser diätetischen Forderung kaum angeboten. Es sind zwar relativ eiweissreiche Produkte für die Bevölkerung von Hungerkrisengebieten in Nahost und Fernost hergestellt worden. Sie vermochten jedoch geschmacklich nicht zu befriedigen, zeigen eine beim Kauen unangenehme Konsistenz, so dass sie sich beim Publikum nicht durchsetzen konnten, und leiden weiterhin an dem Nachteil, dass sie nicht mit Hilfe von schnell laufenden Schneid- und Wickelmaschinen hergestellt werden können, wie sie in der Süsswarenindustrie üblich sind. Eiweissreiche Massen sind, wenn die Eiweisskörper voll gelöst sind, extrem zäh und werden dementsprechend zumeist nur durch Anwirken zu einer pastösen Masse zusammengefügt. Diese Masse ist dann feucht und bröckelig und kann allenfalls zu Riegeln ausgeformt werden, die dann geschnitten und vor oder nach dem Verpacken an der Oberfläche angetrocknet werden. Die in dieser Weise gebildeten Produkte zeigen beim weiteren Kauen wegen des Quellens der Eiweissbestandteile eine schleimige Konsistenz an, die insbesondere bei hohen Eiweissgehalten äusserst unangenehm ist und die Durchsetzung von Süsswaren mit hohem Proteingehalt bislang verhindert hat.

Aus der DD-A-130 910 ist eine umhüllte, proteinreiche Süssware bekannt, welche wasserhaltig ist und die Proteine in Gelform, insbesondere als Milchproteingele enthält. Diese Gele werden mit Hilfe einer komplizierten Pregelatinierung gebildet, die darin besteht, bestimmte Proteinbestandteile, nämlich Milch, Eiweiss, Kopräzipitat und/oder natives Molkenprotein nach der Zugabe von Süssungsmitteln, Fetten, Wasser und gegebenenfalls weiteren üblichen Hilfsstoffen, durch Kneten zu einer homogenen Gelvorstufe umzuwandeln, die dann durch eine Hitze/Druck-Behandlung in ein Produkt überführt wird, das in heissem Zustand gegossen oder gewalzt wird. Die in dieser Weise erhaltenen bröckeligen, proteinhaltigen Massen lassen sich nicht auf den normalen schnell laufenden Schneid- und Wickelmaschinen verarbeiten und vermögen auch im Hinblick auf ihre Geschmackseigenschaften und ihre Kaubarkeit nicht voll zu befriedigen.

Aus der US-A-3 574 649 ist eine flüssig gefüllte Süssware mit einem flüssigen Karamelkern, der mit einer Sperrschicht aus einem proteinhaltigen Material und einer Schokoladenaussenhülle versehen ist, bekannt. Diese Süssware enthält somit keine eiweissreiche Kernmasse, sondern ein flüssiges Material in Form eines Sirups, der bei Raumtemperatur im wesentlichen flüssig ist, bei dem es sich um einen Zuckersirup oder auch um Honig, Fondant, Fruchtgelee oder Karamelsirup handeln kann. Dieses flüssige Kernmaterial wird durch Einfrieren verfestigt und mit einem flüssigen Puffermedium in Form eines Käses versehen, worauf das erhaltene Produkt mit einer fetthaltigen Hüllschicht, beispielsweise einer Schokoladenhülle, umgeben wird.

Die FR-A-2 201 041 beschreibt eine proteinhaltige Süssware, nämlich ein gefülltes Bonbon mit einer Zuckerhülle auf der Grundlage von Zucker, Glucosesirup, Frischmilch, Vanillezucker und Natriumbicarbonat und einer Füllung aus einem bestimmten Gemisch aus tierischen und pflanzlichen Proteinen in Form von mehlartigen Produkten, die mit einem Kohlenhydratbestandteil wie Glucosesirup, Fett und gegebenenfalls Wasser zu einer pastenförmigen Masse verarbeitet worden sind. Aus den Verfahrensangaben dieser Druckschrift ist erkennbar, dass das Füllmaterial eine Art Karamelmasse darstellt, die allenfalls in erhitztem Zustand plastisch verformbar ist.

Die Aufgabe der vorliegenden Erfindung besteht nun darin, eine Süssware der eingangs angegebenen Gattung zu schaffen, die einen hohen Gehalt an Eiweissstoffen aufweist, geschmacklich und in ihrem Kauverhalten voll zu befriedigen vermag und mit Hilfe unkomplizierter Herstellungsverfahren und -vorrichtungen hergestellt und verarbeitet werden kann.

Es wurde nun überraschenderweise gefunden, dass die Lösung dieser Aufgabe dadurch gelingt, dass man den angestrebten hohen Eiweissanteil in Form einer flüssigen bzw. pastenförmigen Eiweissphase überwiegend in den Kern einer Süssware einbringt und diesen Kern mit einer fetthaltigen, geschmeidigen Weichkaramelmasse umhüllt. Hierdurch erhält man einen Strang, der die Verarbeitungseigenschaften der Hüllmasse annimmt und sich in der gewünschten Weise unter Anwendung üblicher Vorrichtungen verarbeiten lässt.

Gegenstand der Erfindung ist daher eine umhüllte Süssware mit einem Kern aus einer eiweisshaltigen Masse und einer zuckerhaltigen Hülle und einem Proteingehalt von 10 bis 50 Gew.-%, die gekennzeichnet ist durch eine Süssware in Form eines teilweise ummantelten Schnittprodukts, mit einem Randstreifen und einer optisch davon abgehobenen Kernmasse, welche die Eiweissbestandteile in Form von hydrophobierten Eiweisspartikeln enthält, erhältlich durch Umhüllen einer pastenförmigen, eiweissreichen Kernmasse mit einer fetthaltigen, geschmeidigen Weichkaramelmasse, unter Bildung eines Stranges und Abquetschen oder Zerschneiden des Strangs.

Die Unteransprüche 2 bis 7 betreffen besonders bevorzugte Ausführungsformen dieser erfindungsgemässen Süssware sowie ein Verfahren zu ihrer Herstellung.

Der hierin verwendete Ausdruck «etwa» definiert einen Bereich, der von dem damit bezeichneten Wert um ± 10%, vorzugsweise ± 5%, abweicht.

Die erfindungsgemäss vorgesehene fetthaltigen Weichkaramelmasse oder toffeeartige Bonbonmasse, die den eiweissreichen Kern umgibt, verleiht der aufgrund ihres hohen Eiweissgehaltes bröckeligen und fettärmeren Kernmasse einerseits das gewünschte Verarbeitungsverhalten und anderseits überraschend vorteilhafte Geschmacks- und Konsistenzeigenschaften. Aufgrund dieser Eigenschaften kann die erfindungsgemässe Süssware ohne weiteres von Hand oder mit Hilfe üblicher Vorrichtungen zu Strangform verarbeitet und durch Egalisierrollen, Schneid- oder Wickelstationen einer üblichen Süsswarenherstellungsvorrichtung geführt werden, ohne dass es zu Störungen kommt.

Im Hinblick auf die Geschmackseigenschaften und das Kauverhalten hat es sich weiterhin als überraschend vorteilhaft erwiesen, der Kernmasse und/oder der Weichkaramelmasse die Eiweissanteile in Form von hydrophobierten Eiweisspartikeln einzuverleiben. Diese hydrophobierten Eiweisspartikel können beispielsweise Eiweissteilchen sein, die durch Umhüllen mit einer Fettschicht gebildet werden. Dies kann beispielsweise dadurch erreicht werden, dass man die für die Herstellung der Süssware verwendeten Eiweissmaterialien mit einem pflanzlichen Fett, einem tierischen Fett, einem synthetischen Speisefett und/oder Lecithin gut durcharbeitet.

Die erfindungsgemässe Süssware, die gemäss dieser bevorzugten Ausführungsform den Eiweissanteil in der Kernmasse und/oder der Weichkaramelmasse in Form von an der Oberfläche hydrophobierten Eiweisspartikeln enthält, besitzt den unerwarteten Vorzug, dass sie sich wesentlich besser kauen lässt. So lassen sich die sonst gummiartigen zäh zusammenhängenden Eiweisspartikel ohne weiteres vereinzeln und führen nicht zu der schleimigen Konsistenz, die beim Genuss herkömmlicher eiweissreicher Produkte nicht zu vermeiden war. Dadurch dass die vorhandenen Eiweisspartikel an ihrer Oberfläche hydrophobiert sind, wird das Quellen während des Kauvorgangs weitgehend verhindert, so dass sich die unerwünscht schleimige Konsistenz des Kauprodukts nicht einstellt, die bei herkömmlichen Produkten mit ähnlich hohen Eiweissgehalten sofort auftreten würde. Aufgrund dieses organoleptisch und kautechnisch überlegenen Verhaltens gelingt es mit der erfindungsgemässen Süssware die für die menschliche Ernährung wertvollen Proteine in ein geschmacklich befriedigendes Produkt einzubringen, so dass es auch möglich wird, die bislang nur schwer in dieser Weise zu nutzenden pflanzlichen Proteine zu verwerten.

Mit Vorteil besteht die erfindungsgemässe Süssware zu mindestens 20 Gew.-% aus der eiweissreichen Kernmasse und noch bevorzugter zu etwa 25 bis 75 Gew.-% aus der eiweissreichen Kernmasse und zu etwa 75 bis 25 Gew.-% aus der sie umhüllenden Weichkaramelmasse.

Die erfindungsgemässe Süssware enthält sowohl in der eiweissreichen Kernmasse als auch in der sie umgebenden Weichkaramelmasse tierisches und/oder pflanzliches Eiweiss, wobei vorzugsweise Milcheiweiss, wie auch Vollmilchpulver oder Magermilchpulver, oder Milcheiweissbestandteile, wie Natriumcaseinat und/oder Molkeneiweiss, eingesetzt werden. Als pflanzliches Eiweiss kommt insbesondere Sojaeiweiss in Frage.

Es ist weiterhin bevorzugt, der Süssware als Eiweiss bzw. Protein enzymatisch abgebautes Eiweiss bzw. Protein zuzusetzen. Bevorzugt besitzt dieses enzymatisch abgebaute Eiweiss ein Molekulargewicht von 1500 bis 10 000. Die Verwendung solcher enzymatisch abgebauter Eiweisse hat den Vorteil, dass die bei hochmolekularem Protein auftretenden Alterungserscheinungen, wie eine Verhärtung oder Geschmackseinbussen, vermieden werden. Hierdurch erhält man ein Produkt mit wesentlich verbesserter Lagerbeständigkeit und leichterer Kaubarkeit.

Die erfindungsgemäss einzusetzenden enzymatisch abgebauten Eiweisse oder Proteine erhält man in an sich bekannter Weise durch Umsetzen von natürlichen und insbesondere lebensmittelrechtlich zugelassenen Eiweissrohstoffen mit proteolytischen Enzymen geringer Aktivität bei Temperaturen und pH-Werten, die für die eingesetzten Enzyme optimal sind. Vorzugsweise setzt man erfindungsgemäss die durch enzymatischen Abbau der Eiweissbestandteile von Molke, Milch, Sojabohnen, Mais, Kartoffeln, Weizen, Ölsaat, Nusskernen, Sonnenblumenkernen, Eiern und/oder Gelatine mit proteolytischen Enzymen, wie Protease, Lipase oder Amylase, d.h. insbesondere Pankreasfragmenten gebildeten Produkte, ein, wobei es auch möglich ist, die enzymatischen Abbauprodukte zu verwenden, die in Gegenwart von Gelatine oder Gelatineabbauprodukten gebildet worden sind.

Es hat sich ausserdem als vorteilhaft erwiesen, den Fettgehalt der eiweissreichen Kernmasse etwas niedriger als den der Weichkaramelmasse zu halten, wobei die Kernmasse vorzugsweise einen Fettgehalt im Bereich von etwa 3 bis 5 Gew.-% aufweist, während die geschmeidige Weichkaramelhüllmasse mit Vorteil einen Fettgehalt von etwa 5 bis 30 Gew.-% und noch bevorzugter von etwa 6 bis 10 Gew.-% aufweist.

Es hat sich ferner gezeigt, dass das Einbringen von Quellstoffen, wie Carrageenaten, Pektinen, Agar, Alginaten, wie Natriumalginat, Kaliumalginat, Calciumalginat etc., Methylcellulose, Carboxymethylcellulose, Johannisbrotkernmehl, Traganth, Stärke in chemisch behandelter und/oder modifizierter Form und insbesondere Gelatine und Gummi arabicum, sowohl in die eiweissreiche Kernmasse als auch in die sie umgebende Weichkaramelmasse überraschende Vorteile mit sich bringt. Hierdurch wird, wie sich gezeigt hat, ein gewisser Zusammenhalt der in hoher Konzentration vorliegenden ungelösten Eiweissanteile, die an sich zu einer bröckeligen Konsistenz des Materials führen würden, bewirkt, so dass während der für die Verarbeitung erforderlichen Zeitdauer die notwendige Mindestgeschmeidigkeit der Kernmasse erreicht wird. Später nimmt die Kernmasse ohne Beeinträchtigung ihres Geschmacks wieder ihre ursprüngliche Bröckeligkeit an.

Gemäss dieser bevorzugten Ausführungsform der Erfindung enthält die Süssware in der Kernmasse und/oder in der Weichkaramelmasse einen oder mehrere der oben angegebenen Quellstoffe in einer Menge von etwa 0,5 bis 5 Gew.-%. Die Quellstoffe werden bei der Herstellung der erfindungsgemässen Süssware bevorzugt in Form einer Lösung eingesetzt, die mit den übrigen Bestandteilen vermischt bzw. verknetet wird.

Die erfindungsgemässe Süssware kann neben den angesprochenen Bestandteilen in der Kernmasse und/oder der Weichkaramelmasse auch in der Süsswarenindustrie übliche und lebensmittelrechtlich zugelassene Bestandteile enthalten, wie Farbstoffe, Süssungsmittel, Konservierungsmittel, Geschmacksstoffe und/oder Aromastoffe.

So enthält die erfindungsgemässe Süssware zur Erzielung des gewünschten süssen Geschmacks als Süssungsmittel insbesondere Zukker, wie Saccharose, Dextrose, Maltodextrin, Glucosesirup und/oder Lactose, Zuckeraustauschstoffe, wie Sorbit, Xylit und/oder Mannit und/oder Süssstoffe. Die beanspruchte Süssware kann weiterhin in der Kernmasse und insbesondere in der Weichkaramelmasse übliche Geschmacks- und Aromastoffe enthalten, wie stark oder schwach entöltes Kakaopulver, Kakaomasse, Schokoladenmasse, Vanillekonzentrate, Fruchtaromen und/oder Karamel und kann mit Hilfe üblicher Aromastoffe, wie Vanillin, Kochsalz oder Essenzen, aromatisiert und auf den gewünschten Geschmack gebracht werden. Weiterhin kann die Süssware übliche zugelassene Lebensmittelfarbstoffe, Konservierungsmittel und Stabilisierungsmittel enthalten. Die hierfür üblichen Zusätze, die einzeln oder in Kombination angewandt werden können, sind dem Fachmann ohne weiteres geläufig und werden daher nicht näher erläutert.

Die erfindungsgemässe Süssware kann allseitig oder vollständig mit der Weichkaramelmasse umhüllt sein, liegt jedoch vorzugsweise in Form eines teilweise ummantelten, insbesondere scheibenförmigen Schnittprodukts vor, bei dem die Weichkaramelmasse die davon vorzugsweise optisch abgehobene eiweissreiche Kernmasse in Form eines Randstreifens und insbesondere eines Ringes umgibt. Mit Vorteil ist dabei die eiweissreiche Kernmasse heller gefärbt als die sie umgebende Weichkaramelmasse, um hierdurch den hohen Proteingehalt der eiweissreichen Kernmasse auch optisch sichtbar zu machen.

Gegenstand der Erfindung ist ferner das Verfahren zur Herstellung der oben definierten Süssware gemäss Anspruch 10, das dadurch gekennzeichnet ist, dass man

1. aus einem Eiweissmaterial eine pastenförmige, eiweissreiche Kernmasse bildet,

2. in an sich bekannter Weise ein Süssungsmittel, Wasser, Kondensmilch und einen Quellstoff zu einer fetthaltigen, geschmeidigen Weichkaramelmasse kocht, die man gegebenenfalls mit üblichen Aromastoffen, Geschmacksstoffen und/oder Farbstoffen versetzt und

3. in an sich bekannter Weise a) maschinell durch Strangpressen unter Verwendung einer zwei Extrudierköpfe aufweisenden Vorrichtung oder b) zunächst manuell einen Strang aus der Kernmasse bildet und mit der Weichkaramelmasse umhüllt und dann unter Verwendung eines Kegelrollers einen Strang mit einem Kern aus der eiweissreichen Masse und einer diesen umgebenden Hülle aus der fetthaltigen, geschmeidigen Weichkaramelmasse formt und den Strang abpresst oder zerschneidet und gegebenenfalls weiterverformt.

Bei dem erfindungsgemässen Verfahren können die eingesetzten Bestandteile, wie das Eiweissmaterial, das Süssungsmittel, das Fett, der Quellstoff und dergleichen in Form einzelner Substanzen oder in Form von Substanzgemischen eingesetzt werden, so dass es beispielsweise möglich ist, verschiedenartige Eiweissarten, wie gegebenenfalls enzymatisch abgebautes pflanzliches und tierisches Eiweiss, in Form von Mischungen einzusetzen. Gleiches gilt natürlich auch für die Süssungsmittel, die Fette, die Quellstoffe und die Hilfsstoffe, wie die Aromastoffe, die Geschmacksstoffe, die Farbstoffe, die Konservierungsmittel und die Stabilisierungsmittel.

Im Verlaufe des erfindungsgemässen Verfahren können sowohl die eiweissreiche Kernmasse als auch die sie umgebende Weichkaramelmasse in üblicher Weise aromatisiert, geschmacklich abgerundet und gefärbt werden, wozu übliche Aromastoffe, Geschmacksstoffe und/oder Farbstoffe eingesetzt werden, wie sie weiter oben bereits angesprochen wurden.

Bei dem erfindungsgemässen Verfahren hat es sich als besonders vorteilhaft erwiesen, zunächst die hydrophobierte Eiweisspartikel enthaltende Kernmasse zu bilden, indem man das Eiweissmaterial mit dem Süssungsmittel, dem Fett und Wasser in einer beheizten Knetvorrichtung zu einer pastösen Masse verknetet, wonach man den in Wasser gelösten Quellstoff zugibt und die Masse weiter durcharbeitet. Hierbei sollte man wegen des hohen Eiweissanteils bei einer Temperatur von nicht mehr als 50 °C arbeiten. Die für das Umhüllen der Kernmasse herangezogene Weichkaramelmasse bildet man mit Vorteil in üblicher Weise unter Verwendung einer aromatisierten Fett-Eiweiss-Paste, die man durch Verkneten des eingesetzten Eiweissmaterials mit Fett in einem Kneter bildet und dann in üblicher Weise walzt und beispielsweise in einer Conche auf die gewünschte Konsistenz bringt. Die Weichkaramelmasse kocht man beispielsweise aus Zucker, Glucosesirup und Sorbit, gibt dann gezuckerte Kondensmilch und einen Quellstoff zu und rührt dann die die hydrophobierten Eiweisspartikel enthaltende Masse unter, wonach man die Weichkaramelmasse in üblicher Weise mit Vanillin, Kochsalz oder Essenzen aromatisiert und kühlt. Unter Bildung der vorzugsweise dunkel gefärbten Weichkaramelmasse und der bevorzugt hellen Kernmasse bildet man unter Anwendung entsprechender Mengenverhältnisse eine Süssware mit einem Gesamtproteingehalt von vorzugsweise 15 bis 25 Gew.-%.

Dabei ummantelt man die helle Kernmasse mit der dunklen Weichkaramelmasse mit Hilfe einer bekannten Vorrichtung, die zwei Extrudierköpfe aufweist, und einen mit der hellen, eiweissreichen Kernmasse gefüllten Weichkaramelstrang erzeugt. Anschliessend führt man diesen Strang über Kegelroller und Schneid-Wickel-Vorrichtungen und verarbeitet ihn in dieser Weise zu Einzelbonbons oder Stangen.

Man erhält eine Süssware mit einem hellen, eiweissreichen Kern und einer diesen Kern umgebenden fetthaltigen, geschmeidigen Weichkaramelmasse, wobei der Gesamtproteingehalt von dem Verhältnis abhängt, in dem die helle, eiweissreiche Kernmasse und die dunkle Weichkaramelmasse eingesetzt werden.

## Patentansprüche

1. Umhüllte Süssware mit einem Kern aus einer eiweisshaltigen Masse und einer zuckerhaltigen Hülle und einem Proteingehalt von 10 bis 50 Gew.-%, gekennzeichnet durch eine Süssware in Form eines teilweise ummantelten Schnittprodukts, mit einem Randstreifen und einer optisch davon abgehobenen Kernmasse, welches die Eiweissbestandteile in Form von hydrophobierten Eiweisspartikeln enthält, erhältlich durch Umhüllen einer pastenförmigen, eiweissreichen Kernmasse mit einer fetthaltigen, geschmeidigen Weichkaramelmasse unter Bildung eines Strangs und Abquetschen oder Zerschneiden des Strangs.

2. Süssware nach Anspruch 1, dadurch gekennzeichnet, dass sie zu mindestens 20 Gew.-% aus der eiweissreichen Kernmasse besteht.

3. Süssware nach Anspruch 1, dadurch gekennzeichnet, dass sie aus etwa 25 bis 75 Gew.-% der eiweissreichen Kernmasse und etwa 75 bis 25 Gew.-% der sie umgebenden Weichkaramelmasse besteht.

4. Süssware nach mindestens einem der vorhergehenden Ansprüche, dadurch gekennzeichnet, dass sie als Eiweiss bzw. Protein tierisches und/oder pflanzliches Eiweiss, wie Milcheiweiss, Milcheiweissbestandteile, wie Natriumcaseinat und/oder Molkeneiweiss und/oder enzymatisch abgebautes Eiweiss, enthält.

5. Süssware nach Anspruch 4, dadurch gekennzeichnet, dass sie enzymatisch abgebautes Eiweiss mit einem Molekulargewicht von 1500 bis 10 000 enthält.

6. Süssware nach mindestens einem der vorhergehenden Ansprüche, dadurch gekennzeichnet, dass die eiweissreiche Kernmasse einen Fettgehalt von 2 bis 15 Gew.-% aufweist.

7. Verfahren zur Herstellung der Süssware nach den Ansprüchen 1 bis 6, dadurch gekennzeichnet, dass man

1) aus einem Eiweissmaterial eine pastenförmige, eiweissreiche Kernmasse bildet,

2) in an sich bekannter Weise ein Süssungsmittel, Kondensmilch und einen Quellstoff zu einer fetthaltigen, geschmeidigen Weichkaramelmasse kocht, die man gegebenenfalls mit üblichen Aromastoffen, Geschmacksstoffen und/oder Farbstoffen versetzt und

3) in an sich bekannter Weise a) maschinell durch Strangpressen unter Verwendung einer zwei Extrudierköpfe aufweisenden Vorrichtung oder b) zunächst manuell einen Strang aus der Kernmasse bildet und mit der Weichkaramelmasse umhüllt und dann unter Verwendung eines Kegelrollers einen Strang mit einem Kern aus der eiweissreichen Masse und einer diesen umgebenden Hülle aus der fetthaltigen, geschmeidigen Weichkaramelmasse formt und den Strang abpresst oder zerschneidet und gegebenenfalls weiterverformt.

## Claims

1. A coated confectionery comprising a core compound containing protein and a coating containing sugar and having a protein content of from 10 to 50% by weight, characterized in that the confectionery is in the form of a partially coated cut product wherein the coating compound surrounds the core compound and is optically contrasted therewith, which comprises the protein component in the form of hydrophobed protein particles, obtainable by coating a pastelike, high protein core compound with a fat-containing pliable, soft caramel compound, forming a strand and squeezing off or cutting said strand.

2. Confectionery according to claim 1, characterized in that it consists to at least 20% by weight of the high protein core compound.

3. Confectionery according to claim 1, characterized in that it consists of about 25 to 75% by weight of the high protein core compound and about 75 to 25% by weight of the surrounding soft caramel compound.

4. Confectionery according to at least one of the proceeding claims, characterized in that it comprises as protein animal and/or vegetable protein, such as milk protein, milk protein components, such as sodium caseinate and/or whey proteins and/or enzymatically decomposed protein.

5. The confectionery according to claim 4, characterized in that it comprises enzymatically decomposed protein having a molecular weight of 1.500 to 10.000.

6. The confectionery according to at least one of the preceeding claims, characterized in that the high protein core compound has a fat content of 2 to 15% by weight.

7. The process for the preparation of the confectionery according to claims 1 to 6, characterized by

1) forming from a protein material a paste-like high protein core compound,

2) preparing a fat-containing pliable caramel compound by cooking a sweetening agent, evaporated milk and a swelling agent by a method known per se, and adding if desired usual aromatic substances, flavorings, and/or colorings and

3) forming a strand with the high protein core compound being coated by the fat-containing, pliable, soft caramel compound by a method known per se either a) by extruding using an apparatus comprising two extruder heads or b) at first providing manually a strand of the core compound and coating this with the soft caramel compound using a tapered roller and thereafter squeezing off or cutting the strand and if desired further forming it.

## Revendications

1. Sucrerie enrobée comprenant un cœur en une pâte contenant une albumine et un enrobage contenant du sucre, et ayant une teneur en protéines comprise entre 10 et 50% en poids, caractérisée par le fait qu'elle se présente sous la forme d'un produit découpable, partiellement enrobé, comprenant une bande marginale et un cœur en relief se détachant optiquement de celle-ci, qui contient les composants albuminiques sous forme de particules d'albumine rendues hydrophobes, que l'on peut obtenir en enrobant un cœur de consistance pâteuse et riche en albumine avec une pâte malléable de caramel mou contenant des matières grasses, en formant un bande continue, et en sectionnant par écrasement ou par découpe la bande.

2. Sucrerie selon la revendication 1, caractérisée par le fait qu'elle est constituée par au moins 20% en poids de la pâte de cœur riche en albumine.

3. Sucrerie selon la revendication 1, caractérisée par le fait qu'elle est constituée par environ 25 à 75% en poids de la pâte de cœur riche en albumine et par 75 à 25% en poids de la pâte de caramel mou qui l'entoure.

4. Sucrerie selon l'une quelconque des revendications précédentes, caractérisée par le fait qu'elle contient en tant qu'albumine ou protéine, une albumine animale et/ou végétale telle que de l'albumine de lait, des composants d'albumine de lait comme du caséinate de sodium et/ou de l'albumine de petit lait et/ou de l'albumine séparée par voie enzymatique.

5. Sucrerie selon la revendication 4, caractérisée par le fait qu'elle contient de l'albumine séparée par voie enzymatique dont le poids moléculaire est compris entre 1500 et 10 000.

6. Sucrerie selon l'une quelconque des revendications précédentes, caractérisée par le fait que la pâte de cœur riche en albumine a une teneur en matières grasses comprise entre 2 et 15% en poids.

7. Procédé de fabrication d'une sucrerie selon l'une quelconque des revendications 1 à 6, caractérisé par le fait que:

1) On forme une pâte de cœur de consistance pâteuse et riche en albumine en partant d'une substance à base d'albumine.

2) On cuit de manière connue en soi une substance édulcorante, du lait condensé et un agent de gonflement pour obtenir une masse malléable de caramel mou contenant des matières grasses, que l'on mélange éventuellement avec des arômes, des agents de sapidité et/ou des colorants habituels, et

3) On forme de manière connue en soi, a) soit à la machine par extrusion en utilisant un dispositif comprenant deux têtes d'extrusion, b) soit en commençant par constituer manuellement une bande avec la pâte de cœur que l'on enrobe avec la pâte de caramel mou, puis au moyen d'un rouleau conique, une bande comprenant un cœur constitué par la pâte riche en albumine et un enrobage entourant cette dernière et constitué par la substance malléable en caramel mou et contenant des matières grasses, et l'on sectionne par écrasement ou découpe la bande, et éventuellement on la soumet à une autre déformation.